# EUROPEAN PATENT APPLICATION

(11) **EP 2 210 807 A1**
(43) Date of publication of application: **28.07.2010**
(21) Application number: 08784030.2
(22) Date of filing: 19.08.2008
(51) Int. Cl.: B62M 23/02, F16C 32/04

(54) **MAGNETIC LEVITATION MAGNETO-ELECTRIC BICYCLE WHEEL HUB**

(30) Priority: 16.11.2007 CN 200720059662 U
(71) Applicant: Wang, Zhiping, Guangdong 523000 (CN)
(72) Inventor: Wang, Zhiping, Guangdong 523000 (CN)
(74) Representative: Stuttard, Garry Philip
(86) International application number: PCT/CN2008/072039
(87) International publication number: WO 2009/062418

(57) **Abstract**

The present invention discloses a magnetic suspension type magnetic-electronic bicycle wheel hub, which comprises a wheel hub, two wheel hub end closures, and a flywheel and a brake disc fixed to the two wheel hub end closures; a stator shaft with a spline at its middle is fixed in the holes of the two wheel hub end closures, and a stator is fixed on the stator shaft via the spline; six windings are wound in the slots located at the stator, and magnetic blocks are affixed at the outer circumference of the stator; two transmission gear sets are also fixed to the stator shaft to drive the two dynamotors mounted on the stator to rotate; a circle of magnetic blocks are affixed to the inner circumference of the wheel hub, which enable the rear wheel of the bicycle to generate electricity by itself. When the wheel hub starts to rotate after a rider pedals the bicycle, the transmission gear sets are driven to rotate in high speed by big idler wheels, and the dynamotors are driven by multistage gear graduation to rotate in high speed to generate electricity; the dynamotors generate electricity to make electric current to run through the windings, so, the S poles or N poles of the magnetic blocks on the stator and the magnetic blocks on the wheel hub repel each other, which speeds up the rotation of the wheel hub; so, the running speed of the bicycle is increased.

## Description

### BACKGROUND OF THE INVENTION

### 1. Field of the Invention

The present invention involves a bicycle auxiliary power unit, particularly involves a magnetic suspension type magnetic-electronic bicycle wheel hub.

### 2. Description of the Related Art

Currently, bicycle is an important vehicle used widely by urban and rural residents in the country; especially for the energy shortage is increasingly serious, and the tail gas exhausted by various motor vehicles pollutes the atmospheric environment, bicycle is still a very good tool instead of walking when people go out. Considering it is quite arduous to ride by manpower, a lot of various kinds of electric bicycles provided with an auxiliary power unit come into the market in succession, which are popular in the consumers. Various existing electric bicycle auxiliary power units separately comprise a power supply, a motor and a decelerating device; the power is provided by a storage battery or a battery jar, and the operating of the motor and the decelerating device drives the bicycle wheels to rotate to move forward. This kind of electric bicycle has the disadvantages of the structure being complicated, the structure rigidity being bad, and the bicycle weight being heavy, etc.; during the process of fast moving, the braking is slow when meeting an emergency situation, so, traffic accident easily occurs; the transmission has big noise, and the parts is worn out easily.

### SUMMARY OF THE INVENTION

The object of the present invention is to overcome the above mentioned disadvantages, to provide a magnetic suspension type bicycle; the bicycle rear wheel hub adopts the magnetic suspension principle, which generates magnetoelectricity during the bicycle is moving, so as to drive the wheel to rotate. It has the advantages of compact structure, small volume, reliable transmission, no noise pollution, and moving safely.

The technical solution adopted by the present invention is that: a magnetic suspension type magnetic-electronic bicycle wheel hub comprises a wheel hub, two wheel hub end closures, and a flywheel and a brake disc fixed to the two wheel hub end closures; a stator shaft (wheel shaft) with a spline at its middle is fixed in the holes of the two wheel hub end closures, and a stator is fixed on the stator shaft via the spline; six windings are wound in the slots located at the stator, and magnetic blocks are affixed at the outer circumference of the stator; two dynamotors are fixed in the holes located axisymmetrically at the stator; the stator shaft is also provided with a gear fixing plate, and the gear fixing plate is fixed to the stator via screws; two sets of transmission gear sets, small idler wheels, and big idler wheels are fixed to the gear fixing plate; a circle of magnetic blocks are affixed to the inner circumference of the wheel hub.

The present invention is also characterized as the following.

Wherein, in the six windings, each three windings that are spaced 120 degrees apart to each other is as one group, and the three windings of one group are separately connected to the two dynamotors in parallel connection.

Wherein, the transmission gear set is composed of six split gears formed by a big and a small gear being integrated as one; the big gear of each split gear is the driving wheel, and the small gear is the driven wheel.

Wherein, the outer circumferences of the small idler wheel and the big idler wheel are provided with rubber rings.

The advantages of the present invention are that: the rear wheel of the bicycle adopts a magnetic suspension type magnetic-electronic bicycle wheel hub, so as to make it as a mechanism capable of generating electricity itself; after a rider pedals the bicycle to make the wheel hub to rotate, the transmission gear sets are driven to rotate by the big idler wheel; the dynamotors are driven by multistage gear graduation to rotate in high speed to generate electricity; the two dynamotors generate electricity to make electric current to run through the windings, so as to generate phenomenon of magnetic suspension; the S poles or N poles of the magnetic blocks on the stator and the magnetic blocks on the wheel hub repel each other, which makes the wheel hub to generate a rotation force around the stator, so as to speed up the rotation of the wheel hub; so, the running speed of the bicycle is increased, and people will feel light and quick, and labor-saving to ride the bicycle; for the present invention adopts manual control, it has the advantages of reliable transmission, moving safely, no noise pollution, and saving a lot of energy.

### BRIEF DESCRIPTION OF THE DRAWINGS

Fig. 1 is a structure schematic diagram of the magnetic suspension type magnetic-electronic bicycle wheel hub of the present invention;

Fig. 2 is a structure schematic diagram of the stator of the magnetic suspension type magnetic-electronic bicycle wheel hub of the present invention; and

Fig. 3 is a schematic diagram of the arrangement of the gear sets of the magnetic suspension type magnetic-electronic bicycle wheel hub of the present invention.

Wherein, 1. wheel hub, 2. wheel hub end closure, 3. flywheel, 4. stator shaft, 5. stator, 6. winding, 7. magnetic block, 8. magnetic block, 9. gear fixing plate, 10. gear set, 11. small idler wheel, 12. big idler wheel, 13. screw, 14. dynamotor, 15. brake disc, 16. dynamotor gear.

### DESCRIPTION OF THE PREFERRED EMBODIMENT

The present invention is best understood from the following detailed description with reference to the accompanying figures and preferred embodiments.

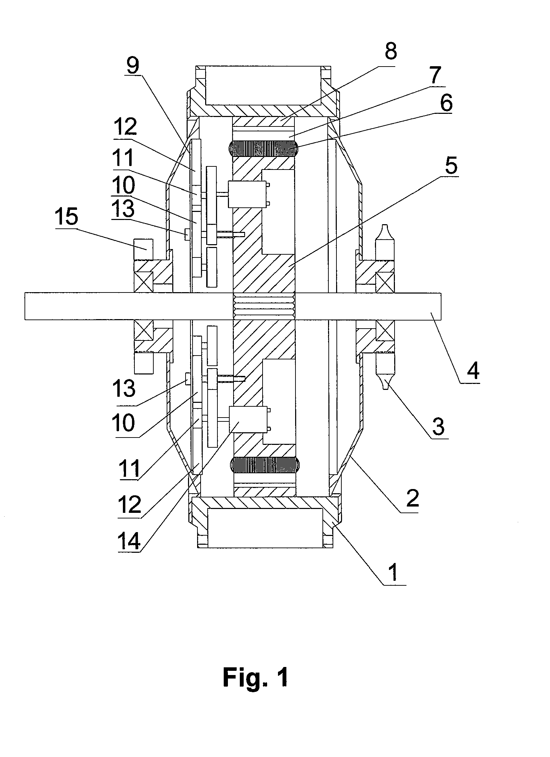

The present invention provides a magnetic suspension type magnetic-electronic bicycle wheel hub, as shown in Fig. 1, which comprises a wheel hub 1, two wheel hub end closures 2, and a flywheel 3 and a brake disc 15 fixed to the two wheel hub end closures 2; a stator shaft 4 (namely the rear wheel shaft) with a spline at its middle is fixed in the holes of the two wheel hub end closures 2, and a stator 5 is fixed on the stator shaft 4 via the spline; six windings 6 are wound in the slots located at the stator 5, and magnetic blocks 7 are affixed at the outer circumference of the stator 5; two dynamotors 14 are fixed in the holes located axisymmetrically at the stator 5; the stator shaft 4 is also provided with a gear fixing plate 9, and the gear fixing plate 9 is fixed to the stator 5 via the screws 13; two sets of transmission gear sets 10, small idler wheels 11, and big idler wheels 12 are fixed to the gear fixing plate 9; a circle of magnetic blocks 8 are affixed to the inner circumference of the wheel hub 1.

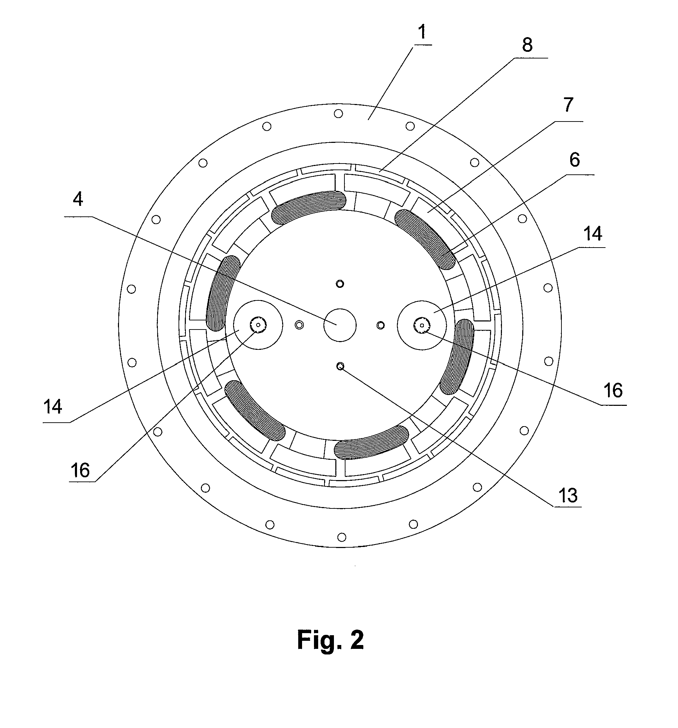

Referring to Fig. 2, in the six windings 6, each three windings that are spaced 120 degrees apart to each other is as one group, and the three windings of one group are separately connected to the two dynamotors 14 in parallel connection. When the transmission gear sets 10 fast rotate to drive the dynamotors 14 to generate electricity, electric current will flow through the windings 6 to generate magnetic suspension phenomenon; by the action of the forward force of a rider pedaling the bicycle, magnetic suspension is further transformed into magnetic-electronic form, so as to drive the wheel hub 1 to rotate like a rotor.

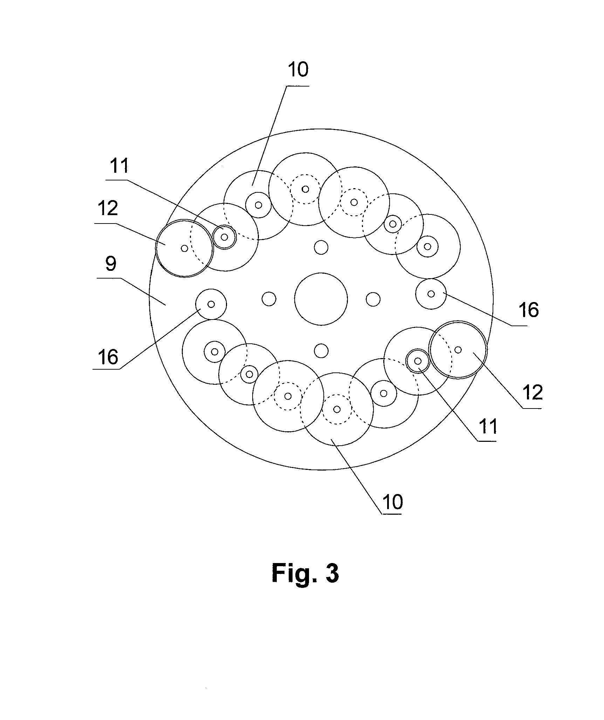

Referring to Fig. 3, two transmission gear sets 10 that are axisymmetrically fixed on the gear fixing plate 9 are separately composed of six split gears formed by a big and a small gear being integrated as one; the big gear of each split gear is the driving wheel, and the small gear is the driven wheel.

When the riders pedal the bicycle, the wheel hub of the bicycle rear wheel is driven to rotate via the bicycle chain and the flywheel 3; the outer circumference of the big idler wheel 12 that is located against the inner side of the wheel hub end closure 2 is provided with a rubber ring, and for the friction of the rubber ring, the big idler wheel 12 is driven to rotate; the outer circumference of the small idler wheel 11 that contacts the big idler wheel 12 is also provided with a rubber ring, and for the friction of the rubber ring, the small idler wheel 11 is driven to rotate by the big idler wheel 12; the gear integrated with the small idler wheel 11 also rotates with the small idler wheel 11, so as to transmit the driving moment to the first small gear of the transmission gear set 10; then the big gear integrated with the small gear transmit the driving moment to the next small gear meshing with it; for each time it is the big gear acting as a driving wheel in a split gear formed by a big and a small gear being integrated as one to drive the small gear meshing with it to rotate, which acts as a driven wheel in the next split gear, so the rotation speed of the transmission gear set 10 is increased one stage after another stage. By transmitting multistage gear graduation to the small gears 16 on the dynamotors, the dynamotors are driven to rotate in high speed to generate electricity; by the two dynamotors generating electricity, electric current will flow through the windings 6 to generate magnetic suspension phenomenon; by the action of the forward force of a rider pedaling the bicycle, magnetic suspension is further transformed into magnetic-electronic form, so as to drive the wheel hub 1 to rotate like a rotor. At the same time, the electric current flowing through the windings 6 makes the magnetic blocks 7 on the wheel hub 1 and the magnetic blocks 8 on the stator 5 to generate the phenomenon of S poles or N poles repelling each other; and the wheel hub 1 is also made to generate a driving moment around the stator 5, which speeds up the rotation of the wheel hub 1, so as to make the rider feel light and quick; the speed and rhythm of pedaling is also increased, so as to generate a new round of cycle, and the running speed of the bicycle is further increased, so, people will feel lighter and quicker to ride the bicycle. When it is required to get off the bicycle or to stop the bicycle at an emergency situation, if only the bicycle is not pedaled and is braked via the brake disc 15, the dynamotors 14 will not generate electricity because of decelerating, and the wheel hub 1 will quickly slow down for the resistance, so the bicycle will quickly be stopped. For the present invention adopts manual control, it has the advantages of reliable transmission, moving safely, no noise pollution, and saving a lot of energy.

## Claims

1. A magnetic suspension type magnetic-electronic bicycle wheel hub comprising a wheel hub (1), two wheel hub end closures (2), and a flywheel (3) and a brake disc (15) fixed to the two wheel hub end closures (2); a stator shaft (4) with a spline at its middle being fixed in the holes of the two wheel hub end closures (2), and a stator (5) being fixed on the stator shaft (4) via the spline; six windings (6) being wound in the slots located at the stator (5), and magnetic blocks (7) being affixed at the outer circumference of the stator (5); two dynamotors (14) being fixed in the holes located axisymmetrically at the stator (5); the stator shaft (4) being also provided with a gear fixing plate (9), and the gear fixing plate (9) being fixed to the stator (5) via screws (13); two sets of transmission gear sets (10), small idler wheels (11), and big idler wheels (12) being fixed to the gear fixing plate (9); a circle of magnetic blocks (8) being affixed to the inner circumference of the wheel hub (1).

2. The magnetic suspension type magnetic-electronic bicycle wheel hub of claim 1, wherein in the six windings (6), each three windings that are spaced 120 degrees apart to each other is as one group, and the three windings of one group are separately connected to the two dynamotors (14) in parallel connection.

3. The magnetic suspension type magnetic-electronic bicycle wheel hub of claim 1, wherein the transmission gear set (10) is composed of six split gears formed by a big and a small gear being integrated as one; the big gear of each split gear is the driving wheel, and the small gear is the driven wheel.

4. The magnetic suspension type magnetic-electronic bicycle wheel hub of claim 1, wherein the outer circumferences of the small idler wheel (11) and the big idler wheel (12) are provided with rubber rings.
